# FASCICULE DE BREVET EUROPEEN

(11) **EP 0 333 575 B1**
(45) Date de publication et mention de la délivrance du brevet: **19.05.1993**
(21) Numéro de dépôt: 89400695.6
(22) Date de dépôt: 14.03.1989
(51) Int. Cl.: G01F 15/06, G01F 15/075

(54) **Procédé et dispositif de lecture automatique d'un compteur de fluide à minuterie mécanique**
Verfahren und Vorrichtung zum automatischen Auslesen eines Flüssigkeitszählers mit einem mechanischen Zählwerk
Process and device for the automatic reading of a fluid meter provided with a roller counting mechanism

(30) Priorité: 14.03.1988 FR 8803296
(43) Date de publication de la demande: 20.09.1989
(73) Titulaire: GAZ DE FRANCE (SERVICE NATIONAL), F-75017 Paris (FR)
(72) Inventeur: Le Squin, Guy, F-71100 Chalon S/Saône (FR); Laurent, Dominique, F-71210 Torcy (FR)
(74) Mandataire: Thévenet, Jean-Bruno

(56) Documents cités:
- DE-A- 1 574 037
- PATENT ABSTRACTS OF JAPAN, vol. 9, no. 170 (P-373)[1893], 16 juillet 1985; & JP-A-60 47 922 (KINMON SEISAKUSHO K.K.) 15-03-1985
- PATENT ABSTRACTS OF JAPAN, vol. 9, no. 203 (P-381)[1926], 21 août 1985; & JP-A-60 67 824 (TOUHOU GAS K.K.) 18-04-1985

## Description

La présente invention a pour objet un procédé et un dispositif de lecture automatique d'un compteur de fluide à minuterie mécanique équipée de disques ou rouleaux rotatifs gradués.

Les compteurs de fluide à minuterie mécanique, tels que des compteurs à gaz ou des compteurs d'eau, prévus pour comptabiliser des consommations de fluide et fournir des indications de consommation cumulée, sont d'un usage très répandu.

On procède habituellement à un relevé manuel de ces compteurs, ce qui est coûteux et peu pratique dans la mesure où une personne préposée à ce service doit se rendre périodiquement chez chacun des usagers pour effectuer le relevé du compteur. Ceci prend beaucoup de temps. De plus, les compteurs n'étant généralement pas accessibles de l'extérieur d'un logement ou d'une propriété, le relevé ne peut se faire qu'en présence de l'usager.

Il serait par ailleurs très coûteux de procéder au remplacement de l'ensemble des compteurs de fluide de type mécanique ou électromécanique, qui présentent en général une longue durée de vie, en vue de leur substituer un compteur d'un tout autre type,.

Il est en outre souvent souhaitable, pour des raisons de sécurité, notamment dans le cas de compteurs de fluides gazeux combustibles, de ne pas disposer de circuits électriques au voisinage immédiat du compteur et les compteurs de type mécanique sont sur ce plan tout-à-fait sûrs.

La présente invention vise à remédier aux inconvénients précités et à permettre d'effectuer automatiquement à distance le relevage d'un compteur de fluide de type mécanique en apportant un minimum de modifications à la structure du compteur.

Ces buts sont atteints grâce à un procédé de lecture automatique délocalisée d'un compteur de fluide à minuterie mécanique équipée de disques ou rouleaux rotatifs gradués, caractérisé en ce qu'il consiste à équiper localement d'un élément réfléchissant la lumière, une portion d'au moins un élément rotatif traditionnel de la minuterie, à transmettre un faisceau de lumière à travers une première fibre optique débouchant en regard de ladite portion dudit élément rotatif, à capter à l'aide d'une seconde fibre optique prenant naissance au voisinage dudit élément rotatif dans une zone voisine de celle où débouche la première fibre optique la lumière réfléchie par ledit élément rotatif, à détecter à la sortie de la seconde fibre optique la lumière issue de cette seconde fibre, à convertir en un signal électrique ladite quantité de lumière détectée, à amplifier ledit signal électrique, à comparer ledit signal électrique à un premier seuil de niveau bas correspondant à la réception d'un minimum de lumière, et à un second seuil de niveau haut correspondant à une valeur d'intensité de lumière reçue supérieure à celle qui correspond à une réflexion normale par ledit élément rotatif traditionnel, mais inférieure à celle qui correspond à une réflexion par ledit élément réfléchissant, à déclencher une alarme correspondant à une défaillance du système de lecture lorsque le signal électrique devient inférieur au premier seuil, à délivrer une impulsion à chaque fois que le signal électrique dépasse le second seuil et à compter et enregistrer dans une mémoire les impulsions délivrées à chaque dépassement du second seuil pour permettre à chaque instant de façon délocalisée un relevé automatique des informations comptabilisées de façon numérique par le compteur de fluide à minuterie mécanique.

Avantageusement, on dispose la première fibre optique de façon concentrique à l'extérieur de la seconde fibre optique.

L'idée en soi d'utiliser un compteur par mesure à distance comprenant des fibres optiques est connue des documents PATENT ABSTRACTS OF JAPAN, vol.9, no. 170 (P-373) [1893]; 16 juillet 1985; & JP-A-6047922 (KINMON SEISAKUSHO K.K.) 15-03-1985 et PATENT ABSTRACTS OF JAPAN, vol.9, no. 203 (P-381) [1926], 21 août 1985; & JP-A-60 67 824 (TOUHOU GAS K.K) 18-04-1985

L'invention concerne également un dispositif de lecture automatique d'un compteur de fluide à minuterie mécanique équipé de disques ou rouleaux rotatifs gradués,
caractérisé en ce qu'il comprend au moins un élément réfléchissant la lumière disposé sur une portion d'au moins un élément rotatif traditionnel de la minuterie, un dispositif d'émission de lumière, un dispositif détecteur de lumière, des première et seconde fibres optiques concentriques extérieure et intérieure disposées de telle manière que l'entrée de la première fibre optique extérieure est disposée au voisinage du dispositif d'émission de lumière, la sortie de la seconde fibre optique intérieure est disposée au voisinage du dispositif détecteur de lumière et les sortie et entrée des première et seconde fibres optiques sont disposées en regard dudit élément réfléchissant, un dispositif convertisseur pour convertir en un signal électrique le faisceau lumineux appliqué au détecteur de lumière, un amplificateur pour recevoir le signal électrique issu du dispositif convertisseur, un premier circuit comparateur pour comparer à un premier seuil le signal électrique amplifié, un second circuit comparateur pour comparer à un second seuil le signal électrique amplifié, un dispositif d'alarme ou de signalisation connecté à la sortie du premier circuit comparateur, et un dispositif de comptage et de mise en mémoire des impulsions délivrées par le second circuit comparateur.

Le dispositif d'émission de lumière peut comprendre une diode électroluminescente émettant dans le proche infra rouge.

Le dispositif détecteur de lumière et le dispositif convertisseur peuvent être constitués par un élément commun tel qu'une photodiode ou un phototransistor.

Le dispositif selon l'invention peut être appliqué notamment à un compteur de fluides gazeux et dans ce cas, les circuits électroniques disposés au voisinage de l'entrée de la première fibre optique et de la sortie de la seconde fibre optique peuvent être avantageusement incorporés dans un compteur électronique télérelevable tel qu'un compteur d'énergie électrique.

D'autres caractéristiques et avantages de l'invention ressortiront de la description suivante de modes particuliers de réalisation, donnés à titre d'exemples, en référence aux dessins annexés, sur lesquels :
- la figure 1 est une vue schématique des principaux éléments constitutifs d'un dispositif selon l'invention,
- la figure 2 est un schéma bloc montrant les principaux sous-ensembles fonctionnels d'une partie des circuits électroniques du dispositif selon l'invention,
- la figure 3 est le schéma électronique d'un mode particulier de réalisation des éléments de la figure 2,
- la figure 4 représente le schéma électronique d'un premier mode particulier de réalisation d'un dispositif d'émission de lumière utilisable dans le dispositif de la figure 1,
- la figure 5 représente la forme de la modulation du signal appliqué à l'élément émetteur de lumière du dispositif de la figure 4,
- la figure 6 représente le schéma électronique d'un second mode particulier de réalisation d'un dispositif d'émission de lumière utilisable dans le dispositif de la figure 1, et
- la figure 7 représente la forme de la modulation du signal appliqué à l'élément émetteur de lumière du dispositif de la figure 6.

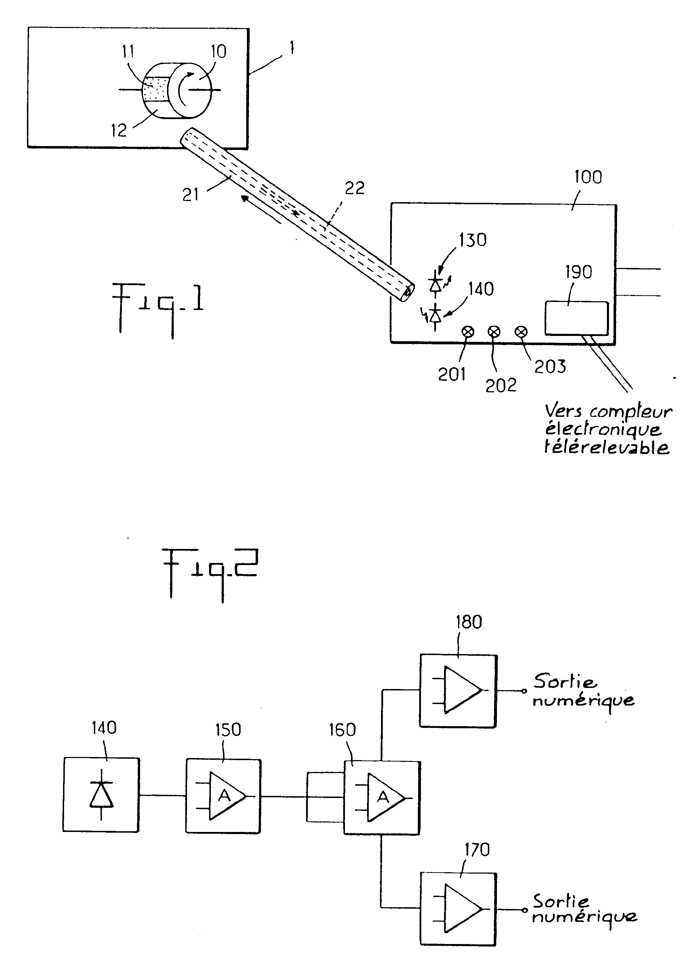

Sur la figure 1, le bloc 1 symbolise un compteur de fluide qui, de façon traditionnelle, est équipé d'une minuterie mécanique composée de rouleaux ou de disques rotatifs gradués permettant d'afficher la valeur de la grandeur mesurée.

On a représenté sur la figure 1 le cas d'une minuterie mécanique à rouleaux et la référence 10 désigne un rouleau rotatif dont la tranche 12 est, conformément à l'invention, munie sur une zone localisée de sa circonférence d'au moins un élément réfléchissant 11. L'élément réfléchissant 11 peut être constitué par un miroir collé sur la tranche 12 du rouleau 10 ou simplement par une pastille adhésive apposée sur la tranche 12 du rouleau 10 et réalisée en une matière souple ou semi-rigide colorée de manière à présenter un grand pouvoir réfléchissant.

Comme cela est visible sur la figure 1, deux fibres optiques 21, 22 coaxiales, dont la longueur peut être de l'ordre de quelques mètres, sont disposées entre le compteur 1 et un bloc 100 de comptage électronique dans lequel sont disposés des circuits électroniques permettant de transformer automatiquement en valeurs numériques les informations fournies par le compteur de fluide 1. Le bloc 100 de comptage électronique comporte une mémoire 190 dans laquelle sont stockées les valeurs numériques représentant les informations de consommation affichées de façon traditionnelle par les rouleaux 10 de la minuterie mécanique du compteur 1. Le bloc 100 de comptage peut être avantageusement intégré à un compteur électronique télérelevable destiné à fournir des informations relatives à la mesure d'une autre grandeur telle que la consommation d'énergie électrique par exemple. Dans ce cas, le bloc 100 est incorporé dans le compteur électronique télérelevable, ou situé au voisinage immédiat de ce dernier, et permet d'effectuer simultanément de façon automatique le relevé des informations de consommation comptabilisées par le compteur électronique télérelevable, et le relevé des informations de consommation de fluide comptabilisées par le compteur de fluide à minuterie mécanique et converties par le dispositif selon l'invention en valeurs numériques stockées dans la mémoire 190.

Dans le mode de réalisation illustré sur la figure 1, il est possible, sans ajouter de circuit électrique ou électronique au voisinage immédiat du compteur de fluide, de transporter à distance les informations de ce compteur de type mécanique en réalisant une conversion sous forme numérique, tout en évitant les couplages galvaniques.

Comme indiqué précédemment, la liaison entre le bloc 100 de comptage et le compteur de fluide 1 est réalisée à l'aide d'un système à deux fibres concentriques 21, 22 qui assurent trois fonctions, à savoir une fonction d'éclairage d'une zone définie d'un élément rotatif 10 du compteur laquelle zone est située sur le parcours de l'élément réfléchissant 11 lorsque l'élément rotatif 10 tourne, une fonction de contrôle de l'intégrité des fibres optiques et une fonction de détection du passage de l'élément réfléchissant 11 dans ladite zone éclairée par les fibres, afin d'en déduire, par le comptage des impulsions produites, des informations numériques représentant les informations affichées par le compteur de fluide.

L'entrée de la fibre externe 21 est couplée à un dispositif d'émission de lumière 130 qui peut comprendre une diode électroluminescente 131 émettant une lumière située dans l'infra rouge proche ou le rouge avec une longueur d'onde située par exemple autour de 660 nm. La sortie de la fibre externe 21 est située en regard de la tranche 12 d'un rouleau 10 de la minuterie du compteur 1.

La fibre optique interne 22 joue le rôle de fibre de détection et reçoit par réflexion par son extrémité d'entrée située au niveau de la sortie de la fibre optique 21, c'est-à-dire en regard de la tranche 12 du rouleau 10, une partie de l'éclairement en lumière rouge ou infra rouge illuminant la cible à partir de la fibre optique externe 21. La sortie de la fibre optique interne 22, située au voisinage de l'entrée de la fibre optique externe 21, est couplée à un dispositif récepteur et convertisseur de lumière 140 qui transforme la lumière en retour issue de la fibre interne 22 en un signal électrique. Le dispositif récepteur et convertisseur de lumière 140 peut comprendre une cellule photoélectrique ou de préférence une photodiode 141.

Lorsque les deux fibres optiques 21 et 22 sont en bon état de fonctionnement et ne sont pas interrompues, une partie de la lumière transmise par la fibre externe 21 et appliquée à la cible (c'est-à-dire à une zone localisée de la tranche 12 du rouleau 10) est réfléchie par cette cible et transmise par la fibre interne 22 au dispositif récepteur-convertisseur 140 qui délivre ainsi un signal électrique supérieur à un premier seuil électrique S1, relativement bas, mais différent de zéro. Si l'une ou l'autre des fibres 21, 22 est endommagée ou coupée accidentellement, aucun faisceau lumineux n'est renvoyé vers le récepteur-convertisseur 140 et le signal électrique de sortie du convertisseur 140 est nul, ce qui permet de déclencher une alarme ou une signalisation indiquant la présence d'un défaut. Si en revanche, l'élément réfléchissant 11 passe dans la zone d'éclairage par la fibre optique externe 21, la fibre interne 22 reçoit un faisceau lumineux réfléchi dont l'intensité est accrue de sorte que le convertisseur 140 délivre un signal électrique dontle niveau est beaucoup plus important que lorsque la partie de la tranche 12 du rouleau 10 située en regard des fibres 21, 22 ne comporte pas d'élément réfléchissant 11. Par suite, le convertisseur 140 délivre alors un signal électrique d'un niveau supérieur à un second seuil électrique S2 supérieur au premier seuil S1.

Le choix de deux seuils S1 et S2 par rapport auxquels est comparé le niveau du signal électrique fourni par le convertisseur 140 permet de combiner une fonction de contrôle efficace de l'intégrité des fibres optiques et une fonction de détection du passage d'un élément réfléchissant 11 en ne mettant en oeuvre que deux fibres optiques 21, 22. Le choix de deux fibres optiques concentriques dans lesquelles la fibre externe 21 assure le rôle d'éclairage d'une zone localisée de la cible et la fibre interne 22 de plus petit diamètre joue le rôle de fibre détectrice permet de garantir une grande précision de détection.

On notera que les fibres optiques 21, 22 peuvent être réalisées en matière plastique si la longueur du trajet aller et retour de lumière ne dépasse pas quelques mètres, et si la source de lumière 131 est constituée par une diode électroluminescente émettant dans l'infra rouge proche. Dans ce cas, l'affaiblissement reste en effet relativement limité, de l'ordre de 0,3 à 0,4 dB par mètre. Le choix de fibres optiques en matière plastique permet de réaliser un dispositif relativement bon marché.

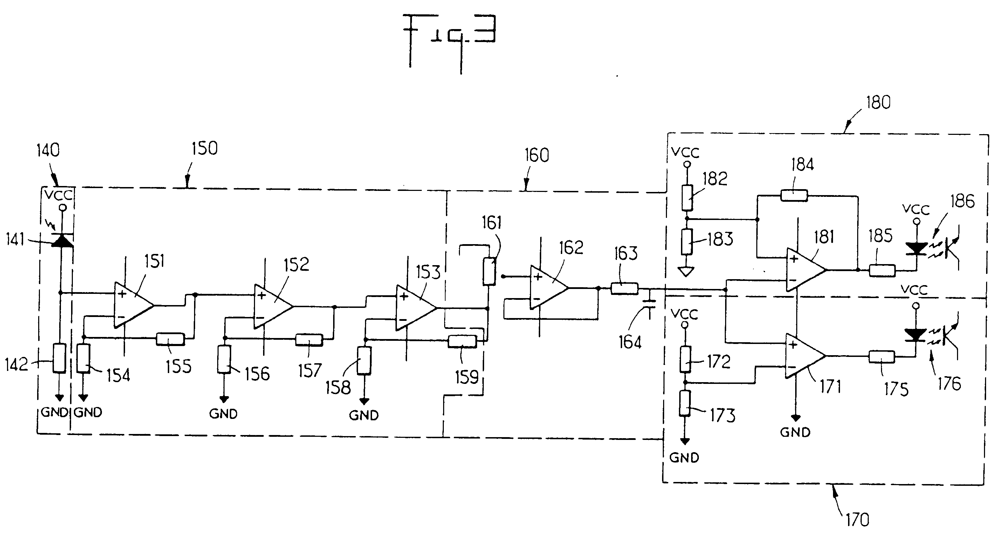

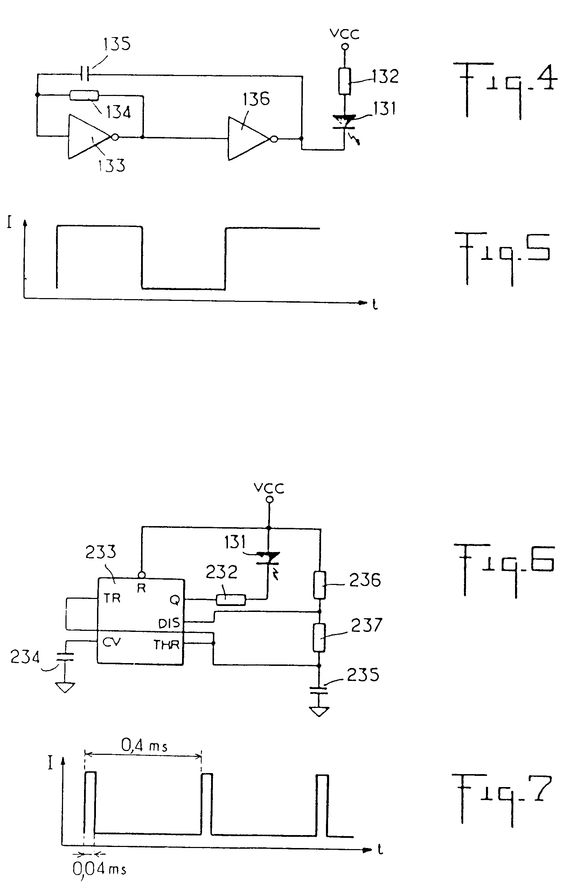

Le dispositif d'émission de lumière 130 couplé à la fibre externe 21 et disposé dans le bloc de comptage 100 comprend avantageusement une diode électroluminescente 131 connectée à la fibre 21 et montée en série avec une résistance 132 ou 232 (figures 4 et 6).

L'alimentation de la diode électroluminescente 131 peut s'effectuer à courant constant, ce qui correspond à une solution très simple à mettre en oeuvre, mais implique une puissance d'émission moyenne compte tenu des limitations de désignation imposées à la diode 131 pour ne pas pénaliser sa durée de vie.

Selon un autre mode de réalisation, dont les circuits des figures 4 et 6 constituent deux exemples, la diode électroluminescente 131 est alimentée en courant pulsé à la puissance crête. Dans ce cas, le dispositif d'émission de lumière comprend un modulateur du courant appliqué à la diode électroluminescente 131.

La puissance crête injectée dans la fibre optique étant une fonction linéaire du courant circulant dans la diode électroluminescente, il est intéressant de mettre en oeuvre un modulateur de courant permettant de travailler à la puissance crête en émission mais à puissance d'alimentation et de dissipation réduite.

Le circuit de la figure 4 représente un modulateur à logique TTL à rapport cyclique de 0,5 (voir la courbe de la figure 5 donnant l'intensité du courant d'alimentation de la diode électroluminescente 131 en fonction du temps). Ce circuit bon marché est composé de deux portes inverseuses 133, 136 montées en série, d'un condensateur 135 connecté entre l'entrée de la porte inverseuse 133 et la sortie de la porte inverseuse 136, d'une résistance 134 connectée entre l'entrée et la sortie de la porte inverseuse 133 et d'une résistance 132 connectée à l'entrée de la diode 131. Dans ce mode de réalisation, la puissance crête n'est que le double de la puissance moyenne.

Le circuit de la figure 6 représente un modulateur utilisant une minuterie électronique pour conférer un rapport cyclique par exemple de 0,1 (comme représenté sur la courbe de la figure 7 donnant l'intensité du courant d'alimentation de la diode électroluminescente 131 en fonction du temps). Le choix d'un rapport cyclique de 0,1 permet d'obtenir une puissance crête dix fois supérieure à la puissance moyenne. Il est ainsi possible de disposer d'une puissance d'émission maximale sans réduire la durée de vie de la diode électroluminescente. La réalisation d'un modulateur à partir d'un circuit intégré 233 auquel il n'est nécessaire d'adjoindre qu'un petit nombre de composants (condensateurs 234, 235, résistances 232, 236, 237) reste particulièrement simple.

Naturellement, le choix d'une modulation de l'émission d'un faisceau lumineux à partir du dispositif d'émission 130 implique que le circuit de réception associé au récepteur-convertisseur 140 tienne compte de façon symétrique lors de l'analyse du signal reçu, de la modulation de ce signal. Ceci correspond toutefois à une démarche classique et, pour plus de clarté dans la suite de la description, on envisagera le cas d'un dispositif de réception appliqué au traitement de signaux non modulés.

La figure 2 montre sous forme de schéma-bloc les principaux modules fonctionnels des circuits électroniques de traitement des signaux électriques représentatifs du faisceau lumineux en retour transmis dans la fibre optique interne 22.

Le module 140 correspond à l'étage récepteur-convertisseur couplé à la fibre optique 22 et délivrant un signal électrique à un étage d'amplification 150 suivi d'un étage suiveur 160 permettant d'ajuster d'une façon globale la sensibilité du dispositif en fonction de la longueur des fibres optiques. Les signaux issus de l'étage suiveur 160 sont appliqués simultanément à deux comparateurs 170 et 180 permettant d'effectuer des comparaisons avec deux seuils S1 et S2 de niveaux différents et de délivrer des signaux numériques représentant respectivement l'état d'intégrité des fibres optiques 21, 22 et la détection ou non d'éléments réfléchissants 11 sur un rouleau 10 du compteur 1.

La figure 3 montre un exemple de réalisation particulier du dispositif récepteur de la figure 2.

Sur la figure 3, l'élément récepteur de lumière 141 assurant la conversion en un signal électrique est constitué par une photodiode qui fonctionne en mode photo-voltaïque et modifie la tension aux bornes d'une résistance de charge 142 de forte valeur.

Les faibles variations de la tension d'entrée sont amplifiées par un amplificateur 150 à trois étages pouvant être réalisé de façon classique à partir d'un circuit intégré unique comportant trois amplificateurs opérationnels 151, 152, 153 et auxquels sont adjointes des résistances de polarisation et de contre réaction 154 à 159.

L'amplificateur 150 est chargé par un potentiomètre 161 de réglage de sensibilité suivi d'un étage adaptateur d'impédance comprenant un amplificateur opérationnel 162 monté en suiveur, et un circuit RC constitué d'une résistance 163 et d'un condensateur 164 formant filtre passe-bas.

La sortie de l'étage 160 d'adaptation d'impédance constituée par le point commun à la résistance 163 et au condensateur 164 est connectée à deux circuits comparateurs 170, 180 qui permettent de comparer le niveau du signal issu de l'étage 160 d'adaptation d'impédance respectivement à un seuil bas S1 et à un seuil haut S2 afin de délivrer en sortie des informations relatives respectivement à l'intégrité des fibres optiques et à la présence ou l'absence d'un élément réfléchissant 11 en regard des fibres optiques.

Le circuit comparateur 170 comprend un amplificateur opérationnel 171 dont l'entrée inverseuse reçoit un signal dont le niveau, fixé par un pont diviseur 172, 173, détermine le seuil bas S1. La sortie de l'étage 160 est reliée à l'entrée non inverseuse de l'amplificateur opérationnel 171. Lorsque le signal appliqué sur l'entrée non inverseuse devient inférieur au niveau du seuil bas S1, la sortie de l'amplificateur opérationnel 171 reliée par une résistance 175 à la cathode de la diode d'un photocoupleur 176 active ce photocoupleur qui délivre un signal de signalisation ou d'alarme indiquant que l'une ou l'autre des fibres optiques a été coupée.

De façon similaire, le circuit comparateur 180 comprend un amplificateur opérationnel 181 dont l'entrée non inverseuse reçoit un signal dont le niveau, fixé par un pont diviseur 182, 183, détermine le seuil haut S2. La sortie de l'étage 160 est reliée à l'entrée inverseuse de l'amplificateur opérationnel 181. Une résistance 184 est en outre montée entre la sortie et l'entrée non inverseuse de l'amplificateur opérationnel 181. Lorsque le signal appliqué sur l'entrée inverseuse de l'amplificateur opérationnel 181 dépasse le niveau du seuil haut S2 lorsque l'élément réfléchissant 11 passe devant les fibres optiques 21, 22, la sortie de l'amplificateur opérationnel 181 reliée par une résistance 185 à la cathode de la diode d'un photocoupleur 186 active ce photocoupleur qui délivre un signal impulsionnel qui est appliqué à un circuit de comptage et de mémorisation 190.

Les signaux délivrés par les photocoupleurs 176, 186 sont des signaux de forme numérique qui se prêtent donc à un comptage, une mémorisation et un télérelevé automatiques.

On notera que les circuits électroniques du dispositif selon l'invention peuvent être alimentés à partir d'une alimentation classique constituée d'un transformateur, d'un pont redresseur, de condensateurs de filtrage et d'un régulateur intégré. Toutefois, compte tenu de la faible consommation du montage, et du fait que les photocoupleurs de sortie 176, 186 apportent un isolement galvanique, il est également possible d'utiliser une alimentation directe à l'aide de circuits intégrés spécialisés, tels que par exemple le circuit d'alimentation du type MAX600 commercialisé par la Société des Etats-Unis d'Amérique Maxim Integrated Products.

Le dispositif de comptage et de signalisation ou d'alarme connecté aux sorties des deux circuits comparateurs 170, 180 peut comprendre par exemple des voyants lumineux indiquant l'état du système.

Ainsi, au départ, le potentiomètre de réglage de sensibilité 161 est réglé en fonction de la longueur des fibres optiques 21, 22 de manière à fixer le seuil bas S1 correspondant à une faible réflexion de la lumière par une partie de la tranche 12 de rouleau 10 non munie d'élément adhésif réfléchissant. Tant que le signal délivré aux comparateurs 170, 180 reste compris entre les seuils S1 et S2, un voyant témoin 202 par exemple de couleur orange reste éclairé (figure 1). Lorsque par suite du passage d'un élément réfléchissant 11 devant les fibres optiques 21, 22, le signal délivré aux comparateurs 170, 180 dépasse le seuil haut S2, un autre voyant 201, par exemple de couleur verte, est éclairé et indique l'enregistrement d'une impulsion en sortie qui sera comptabilisée et stockée en mémoire 190. Si au cours du fonctionnement, l'une des fibres 21, 22 est coupée, un troisième voyant 203, par exemple de couleur rouge, est éclairé pour indiquer que le signal appliqué aux comparateurs 170, 180 est devenu inférieur au seuil bas S1, et qu'un signal d'alarme est disponible sur le photocoupleur 176 de sortie du circuit comparateur 170. Les circuits de commande des voyants 201, 202, 203 à partir des signaux fournis par les photocoupleurs 176, 186 peuvent être tout à fait classiques et réalisés à partir de portes logiques.

Naturellement, les circuits électroniques décrits en référence aux figures 3, 4 et 6 ne sont donnés qu'à titre d'exemples et d'autres modes de réalisation sont possibles. En particulier, la plupart des composants des circuits de la figure 3 pourraitent être réalisés sous la forme d'un circuit intégré unique. Par ailleurs, l'ensemble récepteur-convertisseur de lumière 140 pourrait comprendre un phototransistor plutôt qu'une photodiode.

## Revendications

1. Procédé de lecture automatique délocalisée d'un compteur de fluide (1) à minuterie mécanique équipée de disques ou rouleaux rotatifs gradués,
caractérisé en ce qu'il consiste à équiper localement d'un élément (11) réfléchissant la lumière, une portion d'au moins un élément rotatif traditionnel (10) de la minuterie, à transmettre un faisceau de lumière à travers une première fibre optique (21) débouchant en regard de ladite portion dudit élément rotatif (10), à capter à l'aide d'une seconde fibre optique (22) prenant naissance au voisinage dudit élément rotatif (10) dans une zone voisine de celle où débouche la première fibre optique (21) la lumière réfléchie par ledit élément rotatif (10), à détecter à la sortie de la seconde fibre optique (22) la lumière issue de cette seconde fibre (22), à convertir en un signal électrique ladite quantité de lumière détectée, à amplifier ledit signal électrique, à comparer ledit signal électrique à un premier seuil (S1) de niveau bas correspondant à la réception d'un minimum de lumière, et à un second seuil (S2) de niveau haut correspondant à une valeur d'intensité de lumière reçue supérieure à celle qui correspond à une réflexion normale par ledit élément rotatif traditionnel (10), mais inférieure à celle qui correspond à une réflexion par ledit élément réfléchissant (11), à déclencher une alarme correspondant à une défaillance du système de lecture lorsque le signal électrique devient inférieur au premier seuil (S1), à délivrer une impulsion à chaque fois que le signal électrique dépasse le second seuil (S2) et à compter et enregistrer dans une mémoire (190) les impulsions délivrées à chaque dépassement du second seuil (S2) pour permettre à chaque instant de façon délocalisée un relevé automatique des informations comptabilisées de façon numérique par le compteur de fluide à minuterie mécanique.

2. Procédé selon la revendication 1, caractérisé en ce que l'on dispose la première fibre optique (21) de façon concentrique à l'extérieur de la seconde fibre optique (22).

3. Procédé selon la revendication 1 ou la revendication 2, caractérisé en ce que l'on applique à la première fibre optique (21) un faisceau de lumière dont la longueur d'onde est située dans le proche infra rouge ou le rouge.

4. Dispositif de lecture automatique d'un compteur de fluide (1) à minuterie mécanique équipé de disques ou rouleaux rotatifs gradués, pour la mise en oeuvre du procédé de la revendication 1.
caractérisé en ce qu'il comprend au moins un élément (11) réfléchissant la lumière disposé sur une portion d'au moins un élément rotatif traditionnel (10) de la minuterie, un dispositif (130) d'émission de lumière, un dispositif (140) détecteur de lumière, des première et seconde fibres optiques concentriques extérieure (21) et intérieure (22) disposées de telle manière que l'entrée de la première fibre optique extérieure (21) est disposée au voisinage du dispositif (130) d'émission de lumière, la sortie de la seconde fibre optique intérieure (22) est disposée au voisinage du dispositif (140) détecteur de lumière et les sortie et entrée des première et seconde fibres optiques (21, 22) sont disposées en regard dudit élément réfléchissant (11), un dispositif convertisseur (140) pour convertir en un signal électrique le faisceau lumineux appliqué au détecteur de lumière (140), un amplificateur (150) pour recevoir le signal électrique issu du dispositif convertisseur (140), un premier circuit comparateur (170) pour comparer à un premier seuil (S1) le signal électrique amplifié, un second circuit comparateur (180) pour comparer à un second seuil (S2) le signal électrique amplifié, un dispositif d'alarme ou de signalisation connecté à la sortie du premier circuit comparateur (170), et un dispositif (190) de comptage et de mise en mémoire des impulsions délivrées par le second circuit comparateur (180).

5. Dispositif selon la revendication 4, caractérisé en ce que le dispositif (130) d'émission de lumière comprend une diode électroluminescente (131).

6. Dispositif selon la revendication 5, caractérisé en ce que la diode électroluminescente (131) émet dans le rouge avec une longueur d'onde de l'ordre de 660 nm.

7. Dispositif selon l'une quelconque des revendications 4 à 6, caractérisé en ce que le dispositif détecteur de lumière (140) et le dispositif convertisseur (140) sont constitués par un élément commun tel qu'une photodiode (141) ou un phototransistor.

8. Dispositif selon l'une quelconque des revendications 4 à 7, caractérisé en ce que les première et seconde fibres optiques coaxiales (21, 22) sont réalisées en matière plastique.

9. Dispositif selon l'une quelconque des revendications 4 à 8, caractérisé en ce qu'il comprend un dispositif (160) de réglage de la sensibilité des circuits électroniques de traitement des signaux électriques délivrés par le dispositif convertisseur (140).

10. Dispositif selon l'une quelconque des revendications 4 à 9, caractérisé en ce que le dispositif (130) d'émission de lumière est muni de moyens (133 à 136; 233 à 237) de modulation du faisceau de lumière émise.

11. Dispositif selon l'une quelconque des revendications 4 à 10, caractérisé en ce qu'il est appliqué à un compteur de fluides gazeux et en ce que les circuits électroniques disposés au voisinage de l'entrée de la première fibre optique (21) et de la sortie de la seconde fibre optique (22) sont incorporés dans un compteur électronique télérelevable, tel qu'un compteur d'énergie électrique.

12. Dispositif selon l'une quelconque des revendications 4 à 11, caractérisé en ce que les éléments rotatifs de la minuterie mécanique du compteur de fluides gazeux (1) sont constitués par des rouleaux et en ce que l'élément réfléchissant (11) est disposé sur la tranche (12) d'un rouleau (10).

## Patentansprüche

1. Verfahren zum automatischen Ablesen eines Fluidmessers (1) mit mit Skalen tragenden rotierenden Scheiben oder Walzen ausgestattetem mechanischem Meßwerk an entfernter Stelle,
dadurch gekennzeichnet,
daß es darin besteht,
- einen Teilbereich wenigstens eines herkömmlichen rotierenden Elements (10) des Meßwerks lokal mit einem Licht reflektierenden Element (11) zu versehen,
- ein Lichtbündel durch eine erste optische Faserleitung (21) zu übertragen, die gegenüber dem vorerwähnten Teilbereich des rotierenden Elements (10) endet,
- mit Hilfe einer zweiten optischen Faserleitung (22), die in der Nachbarschaft des rotierenden Elements (10) in einer Zone beginnt, die der benachbart ist, wo die erste optische Faserleitung (21) endet, das an dem rotierenden Element (10) reflektierte Licht einzufangen,
- am Ausgang der zweiten optischen Faserleitung (22) das von dieser zweiten Faserleitung (22) abgegebene Licht zu erfassen,
- die erfaßte Lichtmenge in ein elektrisches Signal umzusetzen,
- dieses elektrische Signal zu verstärken,
- dieses elektrische Signal mit einer ersten Schwelle (S1) von dem Empfang eines Minimums an Licht entsprechendem unterem Niveau und mit einer zweiten Schwelle (S2) von oberem Niveau zu vergleichen, das einem Intensitätswert des empfangenen Lichts entspricht, der höher ist als derjenige, der einer normalen Reflexion durch das herkömmliche rotierende Element (10) entspricht, aber niedriger ist als derjenige, der einer Reflexion an dem reflektierenden Element (11) entspricht,
- einen einem Versagen des Ablesesystems entsprechenden Alarm auszulösen, wenn das elektrische Signal kleiner wird als die erste Schwelle (S1),
- jedes Mal einen Impuls abzugeben, wenn das elektrische Signal die zweite Schwelle (S2) überschreitet,
und
- die bei jedem Überschreiten der zweiten Schwelle (S2) abgegebenen Impulse zu zählen und in einem Speicher (190) zu registrieren, um zu jeder Zeit an entfernter Stelle eine automatische Auslesung in numerischer Art für die durch den Fluidmesser mit mechanischem Meßwerk festgehaltenen Informationen zu ermöglichen.

2. Verfahren nach Anspruch 1, dadurch gekennzeichnet,
daß man die erste optische Faserleitung (21) konzentrisch außen um die zweite optische Faserleitung (22) herum anordnet.

3. Verfahren nach Anspruch 1 oder, dadurch gekennzeichnet,
daß man in die erste optische Faserleitung (21) ein Bündel von Licht einführt, dessen Wellenlänge im nahen Infrarot oder im Rot liegt.

4. Vorrichtung zum automatischen Ablesen eines Fluidmessers (1) mit mit Skalen tragenden rotierenden Scheiben oder Walzen ausgestattetem mechanischem Meßwerk in Durchführung des Verfahrens nach Anspruch 1,
dadurch gekennzeichnet,
daß sie aufweist
- wenigstens ein reflektierendes Element (11), das auf einem Teilbereich wenigstens eines herkömmlichen rotierenden Elements (10) des Meßwerks angeordnet ist,
- eine Einrichtung (130) zum Emittieren von Licht,
- eine Detektoreinrichtung (140) für Licht,
- erste und zweite, zueinander konzentrische äußere (21) und innere (22) optische Faserleitungen, die so angeordnet sind, daß der Eingang der ersten und äußeren optischen Faserleitung (21) in der Nachbarschaft der Einrichtung (130) zum Emittieren von Licht, der Ausgang der zweiten und inneren optischen Faserleitung (22) in der Nachbarschaft der Detektoreinrichtung (140) für Licht liegt und der Ausgang der ersten optischen Faserleitung (21) und der Eingang der zweiten optischen Faserleitung (22) dem reflektierenden Element (11) gegenüberstehen,
- eine Wandlereinrichtung (140) zum Umsetzen des an der Detektoreinrichtung (140) einfallenden Lichtbündels in ein elektrisches Signal,
- ein Verstärker (150) zum Empfangen des von der Wandlereinrichtung (140) abgegebenen elektrischen Signals,
- eine erste Komparatorschaltung (170) zum Vergleichen des verstärkten elektrischen Signals mit einer ersten Schwelle (S1),
- eine zweite Komparatorschaltung (180) zum Vergleichen des verstärkten elektrischen Signals mit einer zweiten Schwelle (S2),
- eine mit dem Ausgang der ersten Komparatorschaltung (170) verbundene Alarm- oder Signalisiereinrichtung
und
- eine Zähl- und Speichereinrichtung (190) zum Zählen und Speichern der von der zweiten Komparatorschaltung (180) abgegebenen Impulse.

5. Vorrichtung nach Anspruch 4, dadurch gekennzeichnet,
daß die Einrichtung (130) zum Emittieren von Licht eine Elektrolumineszenzdiode (131) aufweist.

6. Vorrichtung nach Anspruch 5, dadurch gekennzeichnet,
daß die Elektrolumineszenzdiode im Rot mit einer Wellenlänge in der Größenordnung 660 nm emittiert.

7. Vorrichtung nach einem der Ansprüche 4 bis 6, dadurch gekennzeichnet,
daß die Detektoreinrichtung (140) für Licht und die Wandlereinrichtung (140) durch ein gemeinsames Element (141) wie eine Photodiode (141) oder einen Phototransistor gebildet sind.

8. Vorrichtung nach einem der Ansprüche 4 bis 7, dadurch gekennzeichnet,
daß die erste und die zweite koaxiale optische Faserleitung (21, 22) aus Kunststoffmaterial hergestellt sind.

9. Vorrichtung nach einem der Ansprüche 4 bis 8, dadurch gekennzeichnet,
daß sie eine Regeleinrichtung (160) für die Empfindlichkeit der elektronischen Schaltungen zum Verarbeiten der von der Wandlereinrichtung (140) abgegebenen elektrischen Signale aufweist.

10. Vorrichtung nach einem der Ansprüche 4 bis 9, dadurch gekennzeichnet,
daß die Einrichtung (130) zum Emittieren von Licht mit Mitteln (133 bis 136; 233 bis 237) zum Modulieren des emittierten Lichtbündels ausgerüstet ist.

11. Vorrichtung nach einem der Ansprüche 4 bis 10, dadurch gekennzeichnet,
daß sie bei einem Messer für gasförmige Fluide angewandt wird und
daß die in der Nachbarschaft zum Eingang der ersten optischen Faserleitung (21) und zum Ausgang der zweiten optischen Faserleitung (22) angeordneten elektronischen Schaltungen in einen fernablesbaren elektronischen Zähler wie einen Zähler für elektrische Energie eingebaut sind.

12. Vorrichtung nach einem der Ansprüche 4 bis 11, dadurch gekennzeichnet,
daß die rotierenden Elemente des mechanischen Meßwerks des Messers (1) für gasförmige Fluide aus Walzen bestehen und
daß das reflektierende Element (11) auf dem Umfang (12) einer Walze (10) angeordnet ist.

## Claims

1. Method of remotely and automatically reading a mechanical fluid meter (1) fitted with graduated rotary wheels or disks,
characterized in that it consists in fitting at least a portion of one of the conventional rotary elements (10) of the meter mechanism with a localized light-emitting reflecting element (11), transmitting a light beam via a first optical fiber (21) having an outlet end facing said portion of said rotary element (10), using a second optical fiber (22) having an inlet end in the vicinity of said rotary element (10) in a zone adjacent to the outlet end of the first optical fiber (21) to pick up the light reflected by said rotary element (10), detecting light delivered by said second fiber (22) at an outlet end of said second optical fiber (22), converting said quantity of detected light into an electrical signal, amplifying said electrical signal, comparing said electrical signal both with a low level first threshold (S1) corresponding to a minimum amount of light being received, and with a high level second threshold (S2) corresponding to receiving an amount of light which is greater than the amount which corresponds to normal reflection from said conventional rotary element (10) but less than the amount which corresponds to reflection by said reflecting element (11), triggering an alarm corresponding to a failure of the meter-reading system should the electrical signal go below the first threshold (S1), delivering a pulse each time the electrical signal exceeds the second threshold (S2), and counting and recording in a memory (190) the count of pulses delivered each time the second threshold (S2) is exceeded, thereby making it possible for digitally counted information provided by the mechanical fluid meter to be read remotely and automatically at any time.

2. Method according to claim 1, characterized in that the first optical fiber (21) is disposed concentrically around the second optical fiber (22).

3. Method according to claim 1 or claim 2,
characterized in that the light beam applied to the first optical fiber (21) has a wavelength lying in the near infrared or in the red.

4. Apparatus for automatically reading a mechanical fluid meter (1) fitted with graduated rotary disks or wheels, for using the method of claim 1,
characterized in that it comprises at least one light-reflecting element (11) disposed on a portion of at least one of the conventional rotary elements (10) of the meter mechanism, a light-emitting circuit (130), a light-detecting circuit (140), first and second outer (21) and inner (22) concentric optical fibers disposed in such a manner that the inlet to the outer first optical fiber (21) is disposed in the vicinity of the light-emitting circuit (130), the outlet of the inner second optical fiber (22) is disposed in the vicinity of the light-detecting circuit (140), and the outlet and inlet of the first and second optical fibers (21, 22) are disposed to face said reflecting element (11), a converter circuit (140) for converting the light beam applied to the light-detecting circuit (140) into an electrical signal, an amplifier (150) for receiving the electrical signal from the converter circuit (140), a first comparator circuit (170) for comparing the amplified electrical signal with a first threshold (S1), a second comparator circuit (180) for comparing the amplified electrical signal with a second threshold (S2), an alarm or indicator circuit connected to the output of the first comparator circuit (170), and a circuit (190) for counting and memorizing the pulses delivered by the second comparator circuit (180).

5. Apparatus according to claim 4, characterized in that the light-emitting circuit (130) includes a light-emitting diode (131).

6. Apparatus according to claim 5, characterized in that the light-emitting diode (131) emits in the red with a wavelength of about 660 nm.

7. Apparatus according to any one of claims 4 to 6, characterized in that the light-detecting circuit (140) and the converting circuit (140) are constituted by a common device such as a photodiode (141) or a phototransistor.

8. Apparatus according to any one of claims 4 to 7,
characterized in that the first and second coaxial optical fibers (21, 22) are made of plastics material.

9. Apparatus according to any one of claims 4 to 8,
characterized in that it includes a circuit (160) for adjusting the sensitivity of the electronic circuits for processing the electrical signals delivered by the converter circuit (140).

10. Apparatus according to any one of claims 4 to 9,
characterized in that the light-emitting circuit (130) includes means (133 to 136; 233 to 237) for modulating the emitted light beam.

11. Apparatus according to any one of claims 4 to 10, characterized in that it is applied to a gaseous fluid meter and in that the electronic circuits disposed in the vicinity of the inlet to the first optical fiber (21) and in the vicinity of the outlet from the second optical fiber (22) are incorporated in a remotely-readable electronic meter, such as an electricity meter.

12. Apparatus according to any one of claims 4 to 11, characterized in that the rotary elements of the mechanism of the gaseous fluid meter (1) are constituted by wheels and in that the reflecting element (11) is disposed on the tread (12) of the wheel (10).
